# EUROPEAN PATENT APPLICATION

(11) **EP 2 103 416 A2**
(43) Date of publication of application: **23.09.2009**
(21) Application number: 08405178.8
(22) Date of filing: 14.07.2008
(51) Int. Cl.: B29C 70/54, B29C 37/00, B29C 70/50

(54) **Prepreg peel ply for continuously forming composite material**

(30) Priority: 18.03.2008 JP 2008068822
(71) Applicant: JAMCO CORPORATION, Mitaka, Tokyo (JP)
(72) Inventor: Aijima, Masatoshi, Tokyo (JP)
(74) Representative: Moinas, Michel

(57) **Abstract**

The invention provides a prepreg peel ply to be laminated on a surface of a composite material prepreg for forming a member having a concaved portion such as an H-shaped member, wherein the prepreg peel ply is peeled off after performing hardening so as to improve the adhesiveness of the surface of the composite material. A prepreg peel ply impregnated with resin having a hardening property substantially equivalent to that of the composite material prepreg is used as the peel ply to be laminated on a surface of the composite material prepreg. Through use of such prepreg peel ply, it becomes possible to apply a continuously formed prepreg material to form members having concaved portions, such as H-shaped members, and to form excellent members without voids. By using polyester or nylon as fiber material contained in the prepreg peel ply, the peel property can be improved, and the surface of the composite material prepreg will have a desirable roughness after peeling off the prepreg peel ply, according to which the adhesiveness of the surface is enhanced.

## Description

### Field of the invention

The present invention relates to a prepreg peel ply suitably applied for continuously forming a prepreg composite material in which carbon fibers or other fibers are impregnated with thermosetting resin.

A prepreg peel ply is overlapped on a surface of a prepreg material, which is then continuously formed into a predetermined cross-sectional shape via a hot press to form a prepreg forming member, and in a post-process, the prepreg peel ply is peeled off from the surface of the forming member to enhance the surface roughness of the forming member and to improve the adhesiveness of the surface with other prepreg materials and the like.

Further, the prepreg peel ply also functions to protect the surface of the forming member from contamination and damage during transfer of the material.

### Description of the related art

The art related to continuous forming of a prepreg material is disclosed for example in Japanese patent application laid-open publication Nos. 1-4315 (patent document 1), 2-102029 (patent document 2) and 2001-191418 (patent document 3).

Further, Japanese patent application No. 2007-54048 (patent document 4) discloses a method for performing continuous forming of a member having a prepreg peel ply laminated on a prepreg composite material, and peeling off the prepreg peel ply after the forming step to manufacture a forming member having different cross-sectional thicknesses.

The above-listed patent documents 1 through 3 disclose methods and apparatuses for continuously forming a composite material member using prepreg materials, but they do not refer to any method for laminating a peel ply on the surface of the composite material during the continuous forming step and hardening the same. Moreover, it is difficult to apply a typical dry peel ply on a concaved surface of a member having an H-shaped cross-section as disclosed in patent document 3. Patent document 4 is a patent application filed by the present inventor, which discloses an invention that applies the basic art of the present invention.

### SUMMARY OF THE INVENTION

The present invention aims at providing a prepreg peel ply suitable for performing continuous forming, which can be applied to concaved surfaces.

The prepreg peel ply according to the present invention includes a fiber fabric composed of a fiber having a diameter greater than the diameter of the fiber included in the composite material prepreg, and a thermosetting resin impregnated in the fiber fabric.

Moreover, the present invention provides a prepreg peel ply in which during continuous forming, the prepreg peel ply can be laminated together with the composite material prepreg on a concaved surface of the forming member via the adhesiveness of the prepreg peel ply.

Further, the fiber constituting the fabric of the prepreg peel ply is polyester or nylon.

Even further, the thermosetting resin impregnated in the prepreg peel ply has a hardening property substantially equivalent to that of the thermosetting resin impregnated in the composite material prepreg.

According to the present invention, upon laminating the peel ply on the outermost layer during continuous molding of a composite material, an excellent member without voids formed in the main body of the composite member or in the boundary surface can be formed.

According further to the present invention, the peel ply can be laminated and hardened on concaved surfaces even during continuous forming of a member.

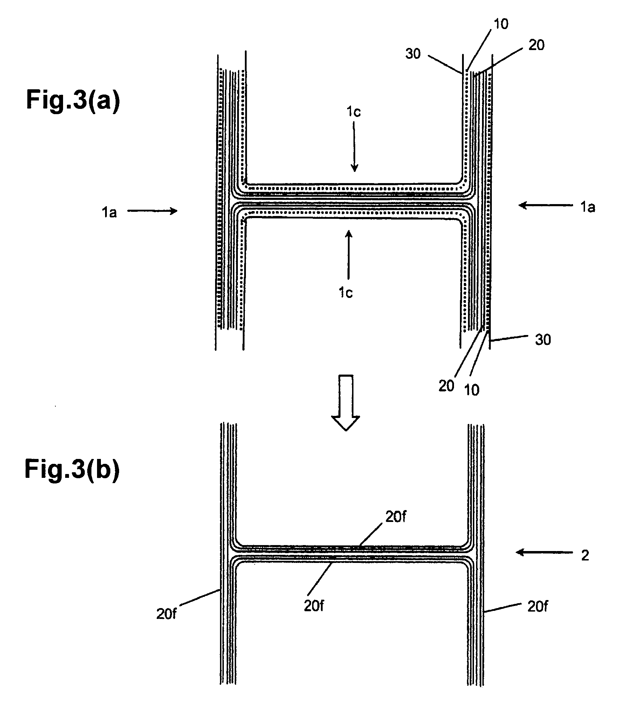

Therefore, the present invention enables to form a member having a prepreg peel ply adhered to the whole outer circumference surface of a member having concaved surfaces, such as an H-shaped cross-section member formed via assembly as illustrated in FIG. 3. Further, by peeling off the prepreg peel ply from the surface of the formed member, it becomes possible to attach other members to the surface in a post-process or to laminate and harden a prepreg material for reinforcement on the surfaces.

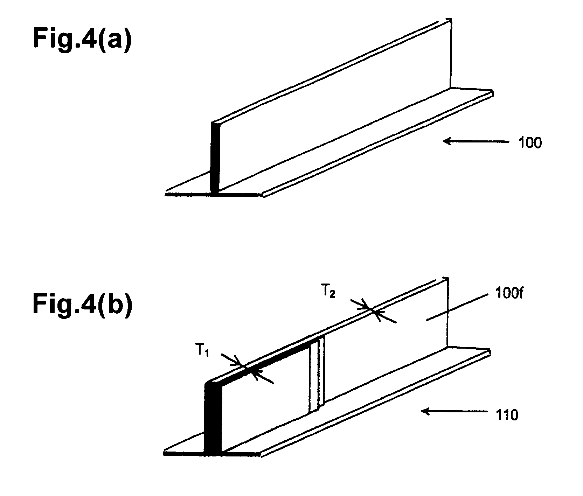

For example, FIG. 4 illustrates a member with a T-shaped cross-section, which is formed by cutting a member having a H-shaped cross-section as illustrated in FIG. 3 in half, wherein the T-shaped member has a prepreg material for reinforcement laminated and hardened on a portion of the surface having peeled off the prepreg peel ply, so that the thickness of the member is gradually increased. The manufacture of such member is facilitated according to the present invention.

### BRIEF DESCRIPTION OF THE DRAWINGS

FIG. 1 is an explanatory view showing the cross-sectional structure of a member formed by laminating a prepreg peel ply on a surface of a prepreg composite material and continuously forming the same;
FIG. 2 is an explanatory view showing the steps for forming a member having laminated the prepreg peel ply according to the present invention;
FIG. 3 is an explanatory view showing the method for manufacturing an H-shaped member;
FIG. 4 is an explanatory view showing the method for manufacturing a T-shaped member having partially varied thicknesses by cutting the H-shaped member in half;
FIG. 5 is a view showing only the resin contained in the prepreg composite material and the prepreg peel ply; and
FIG. 6 is a view showing only the resin contained in the prepreg composite material and the prepreg peel ply.

### DETAILED DESCRIPTION OF THE PREFERRED EMBODIMENTS

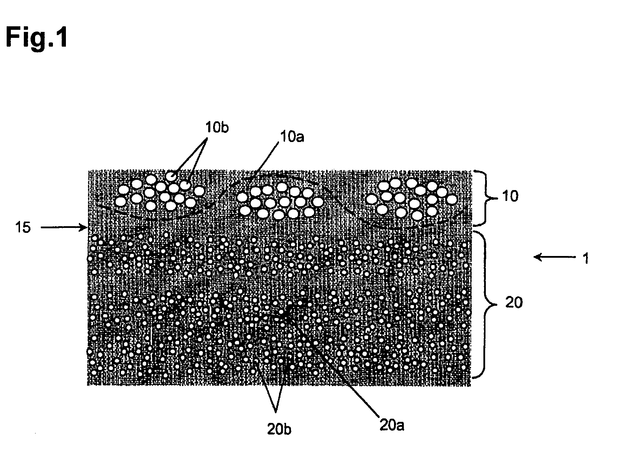

FIG. 1 is a view illustrating the state in which a prepreg peel ply 10 according to the present invention is laminated on a surface of a multilayer prepreg composite material 20 including carbon fibers.

The prepreg peel ply 10 comprises a structure in which polyester or nylon fibers 10b are impregnated with thermosetting resin 10a. The diameter of the fiber 10b is generally a little over 10 micrometers.

On the other hand, the prepreg composite material 20 comprises a structure in which carbon fibers 20b are impregnated with thermosetting resin 20a. The diameter of the carbon fiber 20b of the prepreg composite material 20 is a few micrometers.

FIG. 1 shows the cross-sectional structure of a member 1 having been formed by laminating a prepreg peel ply 10 on the surface of a prepreg composite material 20 and continuously forming the same. A bonding surface 15 is formed between the prepreg composite material 20 and the prepreg peel ply 10.

The prepreg peel ply 10 is peeled off in a post-process to use the forming member 1, and at this time, the prepreg peel ply 10 can be peeled off from the cured member easily without breaking the fibers since polyester or nylon fibers 10b are flexible. Therefore, the prepreg peel ply 10 is used widely for laminating on the surface of a formed member to be bonded with other members, with the aim to prevent contamination and to form a surface having a surface roughness suitable for adhesion by peeling off the ply after hardening.

The prepreg peel ply 10 used in the present invention should preferably include plain-woven fabric or other fabrics formed of polyester or nylon fibers 10b impregnated with thermosetting resin 10a having the same or similar hardening property, especially the same or similar gelation property, with the composite prepreg material, wherein the resin content thereof should preferably be similar to the prepreg composite material 20 in volume ratio.

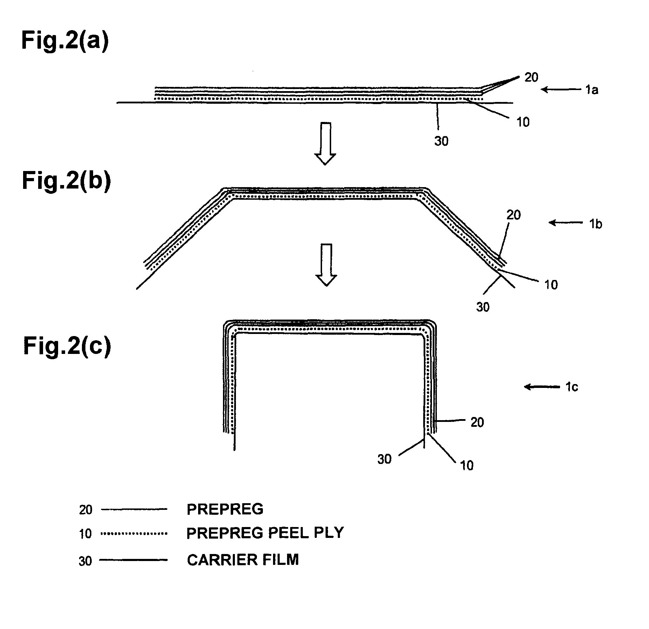

FIGS. 2(a), 2(b) and 2(c) illustrate the steps for forming a member having laminated the prepreg peel ply 10 according to the present invention.

As shown in FIG. 2(a), a material 1a is prepared by laminating a required number of layers of prepreg composite materials 20, overlapping a prepreg peel ply 10 according to the present invention on the surface thereof, and further overlapping a carrier film 30 thereon. Then, as shown in FIGS. 2(b) and 2(c), the material 1a is bent sequentially to form an angular U-shaped member 1c. According to such forming process, if the peel ply is a dry peel ply which does not include resin, the carrier film, the peel ply and the composite material prepreg will separate and could not form the desired angular U-shape. However, such problem can be overcome by applying the prepreg peel ply according to the present invention.

FIG. 3 shows a state in which an H-shaped member is continuously formed by superposing an angular U-shaped member 1c on another U-shaped member 1c and superposing flat strip-shaped members 1a illustrated in FIG. 2(a) on both sides thereof.

After peeling the prepreg peel ply 10 off from the surfaces 20f of a product 2 having been formed and hardened, the surfaces 20f of the prepreg composite material 20 will have a desirable roughness, by which the adhesiveness with other members or adhesives is enhanced.

FIG. 4 shows a method for cutting the H-shaped member in half to form T-shaped member 100, and adding a prepreg for reinforcement to the T-shaped member 100.

By additionally laminating a prepreg material for reinforcement on a relevant surface of the member 100 and hardening the same via an appropriate method, a member 110 having partially varied cross-sectional thicknesses T1 and T2 can be obtained.

If heat hardening using an autoclave or the like is performed to harden a prepreg peel ply laminated on the outermost layer of the prepreg composite material, the rising of temperature under application of pressure is slow, and therefore, voids can easily be removed while the temperature of resin in the prepreg composite material and the prepreg peel ply rises.

On the other hand, according to the continuous forming methods disclosed in patent documents 1 through 3, the prepreg composite material and the prepreg peel ply are subjected to rapid temperature rise and are cured in a relatively short time, so that it becomes difficult to remove voids if the hardening property of the resin impregnated in the prepreg composite material differs from that of the resin impregnated in the prepreg peel ply.

Especially if the resin in the prepreg peel ply gelates and hardens more rapidly than the resin in the prepreg composite material under the above condition, voids will remain contained in the interior of the prepreg composite material, and the voids will either remain in the interior of the prepreg composite material or converge at the boundary surface between the prepreg composite material and the prepreg peel ply.

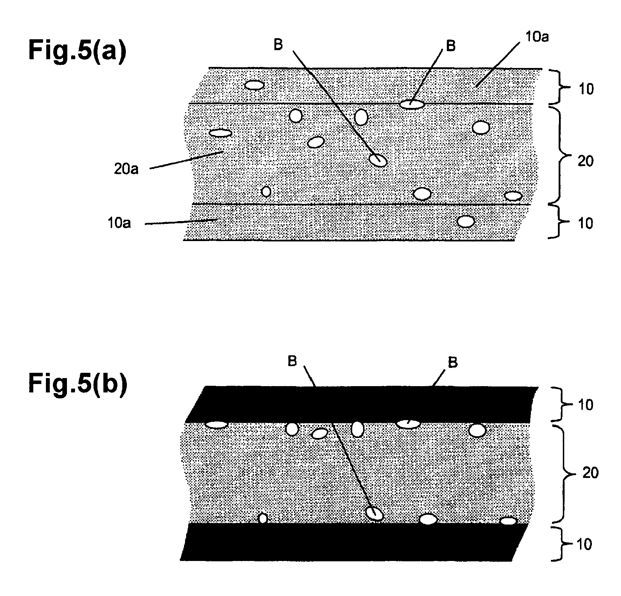

FIG. 5(a) is a view showing the state in which a prepreg peel ply 10 is laminated on a surface of a prepreg composite material 20, wherein only the resin is shown and the fibers are omitted from the drawing. Voids B are dispersed within the resin material of the unhardened prepreg composite material 20 and the prepreg peel ply 10, and the voids will disappear if the material is subjected to a hardening process under appropriate temperature and pressure, but if the prepreg peel ply 10 is hardened faster, the voids B existing in the prepreg composite material 20 will be blocked by the hardened prepreg peel ply 10 and will not disappear. This phenomenon has been experienced through tests.

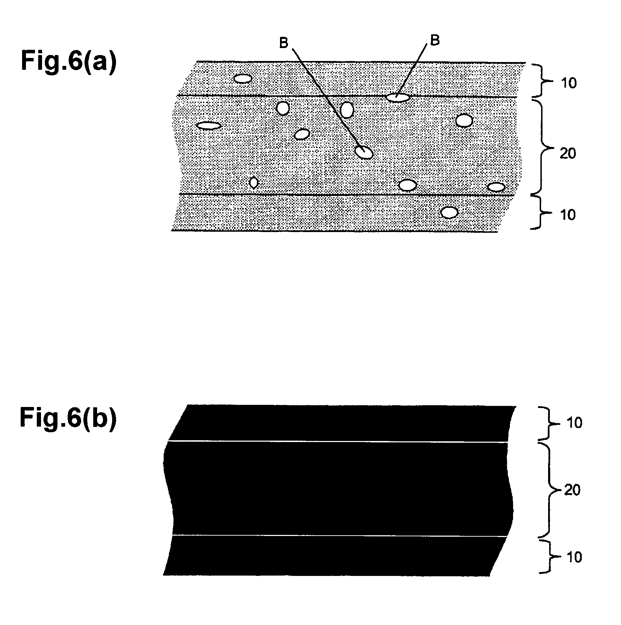

On the other hand, if the resins impregnated in the prepreg composite material 20 and in the prepreg peel ply 10 are the same, or if the hardening properties of the resins are substantially similar, the voids B will not be blocked and will not remain in the material, as shown in FIGS. 6(a) and 6(b).

In conclusion, in order to prevent voids from being contained in the prepreg composite material, the resin in the prepreg composite material and the resin in the prepreg peel ply should either be the same or have substantially similar hardening properties.

## Claims

1. A prepreg peel ply to be laminated on an outermost layer of a composite material prepreg formed by impregnating a carbon fiber or other fibers with thermosetting resin, the prepreg peel ply being peeled off after performing continuous forming so as to form a rough surface on an outermost layer surface of the forming member to enhance the adhesiveness thereof; wherein
the prepreg peel ply includes a fiber fabric composed of a fiber having a diameter greater than the diameter of the fiber of the composite material prepreg, and thermosetting resin impregnated in the fiber fabric.

2. The prepreg peel ply according to claim 1, wherein during continuous forming, the prepreg peel ply can be laminated together with the composite material prepreg on a concaved surface of the forming member via the adhesiveness of the prepreg peel ply.

3. The prepreg peel ply according to claim 1, wherein the fiber constituting the fabric of the prepreg peel ply is polyester or nylon.

4. The prepreg peel ply according to claim 1, wherein the thermosetting resin impregnated in the prepreg peel ply has a hardening property substantially equivalent to that of the thermosetting resin impregnated in the composite material prepreg.
